# EUROPÄISCHE PATENTANMELDUNG

(11) **EP 0 978 227 A2**
(43) Veröffentlichungstag der Anmeldung: **09.02.2000**
(21) Anmeldenummer: 99113199.6
(22) Anmeldetag: 08.07.1999
(51) Int. Cl.: A01B 73/04

(54) **Landwirtschaftliche Arbeitsmaschine**

(30) Priorität: 04.08.1998 DE 19835125
(71) Anmelder: Amazonen-Werke H. Dreyer GmbH & Co. KG, 49205 Hasbergen (DE)
(72) Erfinder: Reinke, Wifried, 26123 Oldenburg (DE)

(57) **Zusammenfassung**

Landwirtschaftliche Arbeitsmaschine mit einem sich zumindest während der Transportfahrt auf Laufräder abstützenden Tragrahmen und einer Zugdeichsel, wobei an dem Tragrahmen jeweils seitlich um in Fahrtrichtung verlaufende Achsen einklappbare Seitenelemente (7) mit Bearbeitungsvorrichtungen angeordnet sind, wobei zwischen den Seitenelementen (7) eine Synchronführungseinrichtung (12) angeordnet ist.

## Beschreibung

Die Erfindung betrifft eine landwirtschaftliche Arbeitsmaschine gemäß des Oberbegriffes des Patentanspruches 1.

Derartige landwirtschaftliche Arbeitsmaschinen sind bekannt. Diese Arbeitsmaschinen weisen einen Tragrahmen und eine Zugdeichsel auf, wobei der Tragrahmen sich auf der Rückseite auf beabstandet zueinander angeordneten Laufrädern auf dem Boden abstützt. An dem Tragrahmen sind einklappbare Seitenelemente angeordnet. Auf derartigen Tragrahmen ist vielfach ein Vorratsbehälter, beispielsweise wenn die landwirtschaftliche Arbeitsmaschine als Sämaschine ausgebildet ist, angeordnet. Bei diesen Maschinen liegt, insbesondere bei gefüllten Vorratsbehältern mit großem Fassungsvermögen und mit großer Arbeitsbreite, der Schwerpunkt relativ hoch. Insbesondere, wenn die Laufräder der Arbeitsmaschine angehoben werden und die Arbeitsmaschine sich dann während der Arbeit auf den an den einklappbaren Seitenelementen angeordneten Elementen auf dem Boden abstützt, besteht die Gefahr, daß der Tragrahmen mit dem Vorratsbehälter um eine der Achsen, um welche die Seitenelemente einklappbar ist, umschlägt, so daß die Maschine umkippt.

Der Erfindung liegt die Aufgabe zugrunde, vor allem bei Arbeitsmaschinen, die einen relativ hohen Schwerpunkt besitzen und einklappbare Seitenteile aufweisen, zu verhindern, daß der mittlere Tragrahmen auf unebenen bzw. hängigen Gelände gegenüber den Seitenrahmen umkippt.

Diese Aufgabe wird erfindungsgemäß durch das kennzeichnende Merkmal des Anspruches 1 gelöst. Infolge dieser Maßnahme wird in einfachster Weise eine Zwangsverbindung zwischen den Seitenelementen geschaffen, so daß sich der Tragrahmen über die Seitenelemente auf den Elementen, die an einem Seitenelement angeordnet sind, abstützen kann. Die Seitenelemente bilden, aufgrund der zwischen den Seitenelementen angeordneten Synchronführungseinrichtung quasi Stützelemente für den Tragrahmen und verhindern somit ein Umschlagen des Tragrahmens.

In einer Ausführungsform der Erfindung ist vorgesehen, daß die Synchronführungseinrichtung als zwischen den einklappbaren Seitenrahmen angeordnete Verbindungsstange ausgebildet ist, daß die Verbindungsstange an dem einen Seitenrahmen im Abstand zu dem Klappelement in einer Ebene oberhalb des Klappelementes und an dem anderen Seitenrahmen im Abstand zu dem Klappgelenk in einer Ebene unterhalb des Klappgelenkes angelenkt ist.

Es ist auch möglich, wie in einer anderen Ausführungsform vorgesehen ist, daß den einander zugewandten Enden der Seitenrahmen ineinandergreifende Zahnradsegmente zugeordnet sind, daß die ineinandergreifenden Zahnsegmente die Synchronführungseinrichtung bilden.

Weitere Einzelheiten der Erfindung sind der Beispielsbeschreibung und den Zeichnungen zu entnehmen. Hierbei zeigen
- Fig.1: die landwirtschaftliche Arbeitsmaschine in der Ansicht von hinten, mit sich in Arbeitsstellung befindlichen Seitenelementen und
- Fig.2: die Arbeitsmaschine in der Ansicht von hinten und in Prinzipdarstellung, wobei die Seitenelemente sich in Transportstellung befinden.

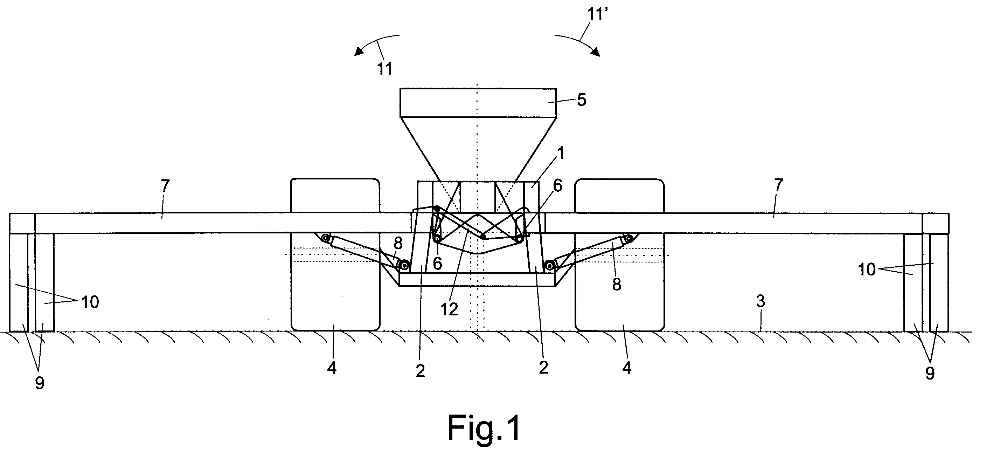

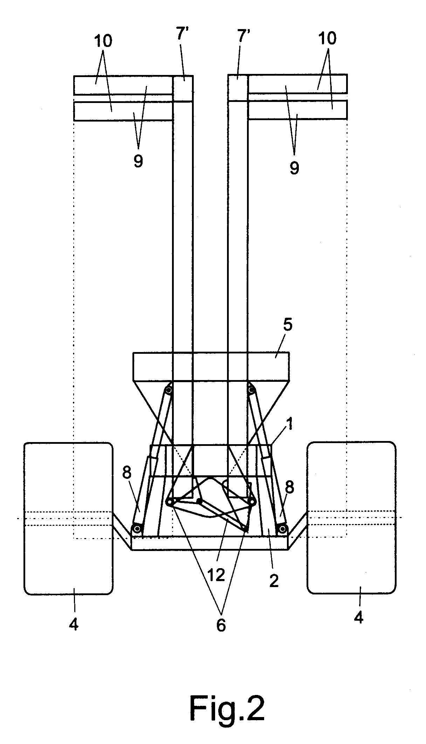

Die landwirtschaftliche Arbeitsmaschine weist den in Fahrtrichtung langgestreckten Tragrahmen 1 auf. An der Vorderseite des Tragrahmens 1 ist die nicht dargestellte Zugdeichsel zum Ankuppeln an einen Ackerschlepper angeordnet. An der Rückseite des Tragrahmens 1 sind über die Tragelemente 2 die beabstandet zueinander auf dem Boden 3 abrollenden Laufräder 4 angeodnet, über die sich der Tragrahmen 1 auf dem Boden 3 abstützt. Auf dem Tragrahmen 1 ist der Vorratsbehälter 5 angeordnet. An der Rückseite des Tragrahmens 1 sind die beiden mittels der Gelenke 6 an dem Tragrahmen 1 einklappbar angeordneten Seitenelemente 7 angeordnet. Diese Seitenelemente 7 sind mittels der Hydraulikzylinder 8 aus der in Fig.1 dargestellten Arbeitsstellung in die Fig.2 dargestellte Transportstellung 7' zu schwenken. An den Seitenelementen 7 sind die schematisch dargestellten Säschare 9, denen Andrückrollen 10 oder eine vorlaufende Bodenwalze zugeordnet sein können, angeordnet. Desweiteren kann an dem Tragrahmen 1 vor den Laufrädern 4 ein nicht dargestelltes Bodenbearbeitungsgerät, beispielsweise ein mit Kulivatorzinken bestückter Tragrahmen oder eine angetriebene Bodenbearbeitungsmaschine, beispielsweise eine Kreiselegge angeordnet sein. Diese Bodenbearbeitungsgeräte und -maschinen sind ebenfalls an einklappbaren Seitenelementen, ähnlich den Seitenelementen 7, angeordnet.

Während des Betriebes stützt sich der Tragrahmen 1 im wesentlichen auf den an den Seitenelementen 7 angeordneten Druckwalzen 10 oder Bodenwalze ab. Es besteht nun am Hang oder auf hügeligen oder unebenen Gelände die Gefahr, daß aufgrund des sehr hoch liegenden Schwerpunktes durch den groß ausgebildeten Vorratsbehälter 5, insbesondere wenn dieser gefüllt ist, daß die Maschine in Arbeitsstellung je nach Geländegebenheit um eine der durch die Gelenke 6 verlaufenden Achsen, wie durch die Pfeile 11 und 11' angedeutet, umschlagen kann. Um dieses zu verhindern, ist zwischen den Seitenelementen 7 eine Verbindungsstange 12, die als Synchronführungseinrichtung ausgebildet ist, angeordnet. Diese Verbindungsstange 12 ist an dem einen Seitenrahmen des einen Seitenelementes 7 im Abstand zu dem Klappgelenk 6 in einer Ebene oberhalb des Klappgelenkes 6 und an dem anderen Seitenrahmen des Seitenelementes 7 im Abstand zu dem Klappgelenk 6 in einer Ebene unterhalb des Klappgelenkes 6 angelenkt. Durch diese Stange 12 wird erreicht, wenn der Tragrahmen 1 mit dem Vorratsbehälter 5 um eine der Achsen der Gelenke 6 umschlagen will, daß der Seitenrahmen 7 sich auf den an dem Seitenrahmen 7 angeordneten Bodenwalze 10 oder Druckwalzen abstützt und das Gewicht des anderen Seitenrahmens 7 mit den daran angeordneten Werkzeugen, wie Säscharen 9, Druckwalzen 10 oder Bodenwalzen 10 mit angehoben werden muß. Hierdurch wird eine Stabilisierung erreicht, so daß ein Gegendrehmoment zu dem Kippmoment erzeugt wird.

Selbstverständlich kann diese Synchronführungseinrichtung 12 auch zwischen den einklappbaren Elementen, an denen die Bodenbearbeitungsgeräte und -maschinen, wie beispielsweise eine Kreiselegge angeordnet ist, angeordnet sein.

An Stelle der vorbeschriebenen Verbindungsstange 12 kann auch den einander zugewandten Enden der Seitenrahmen 7 ineinander greifende jedoch nicht dargestellte Zahnradsegmente zugeordnet sein, mit denen sich die gleiche Wirkung erreichen läßt.

## Patentansprüche

1. Landwirtschaftliche Arbeitsmaschine mit einem sich zumindest während der Transportfahrt auf Laufräder abstützenden Tragrahmen und einer Zugdeichsel, wobei an dem Tragrahmen jeweils seitlich um in Fahrtrichtung verlaufende Achsen einklappbare Seitenelemente mit Bearbeitungsvorrichtungen angeordnet sind, dadurch gekennzeichnet, daß zwischen den Seitenelementen (7) eine Synchronführungseinrichtung (12) angeordnet ist.

2. Arbeitsmaschine nach Anspruch 1, dadurch gekennzeichnet, daß die Synchronführungseinrichtung als zwischen den einklappbaren Seitenrahmen (7) angeordnete Verbindungsstange (12) ausgebildet ist, daß die Verbindungsstange (12) an dem einen Seitenrahmen im Abstand zu dem Klappgelenk (6) in einer Ebene oberhalb des Klappgelenkes (6) und an dem anderen Seitenrahmen (7) im Abstand zu dem Klappgelenk (6) in einer Ebene unterhalb des Klappgelenkes (6) angelenkt ist.

3. Arbeitsmaschine nach Anspruch 1, dadurch gekennzeichnet, daß den einander zugewandten Enden der Seitenrahmen ineinandergreifende Zahnradsegmente zugeordnet sind, daß die ineinandergreifenden Zahnradsegmente die Synchronführungseinrichtung bilden.
